# EUROPEAN PATENT SPECIFICATION

(11) **EP 3 425 468 B1**
(45) Date of publication and mention of the grant of the patent: **01.09.2021**
(21) Application number: 17179844.0
(22) Date of filing: 05.07.2017
(51) Int. Cl.: G05B 23/02

(54) **METHOD AND SYSTEMS FOR FACILITAING USER NAVIGATION AMONG A PLURALITY OF OPERATOR WORKSTATION SCREENS**
VERFAHREN UND SYSTEME ZUR ERMÖGLICHUNG VON BENUTZERNAVIGATION ZWISCHEN MEHREREN BEDIENERARBEITSPLATZBILDSCHIRMEN
PROCÉDÉ ET SYSTÈMES POUR FACILITER LA NAVIGATION D'UN UTILISATEUR PARMI UNE PLURALITÉ D'ÉCRANS DE POSTE DE TRAVAIL D'OPÉRATEUR

(43) Date of publication of application: 09.01.2019
(73) Proprietor: ABB Schweiz AG, 5400 Baden (CH)
(72) Inventor: ZORIC, Goranka, 725 91 Västerås (SE); DOMOVA, Veronika, 723 56 Västerås (SE)
(74) Representative: Kransell & Wennborg KB

(56) References cited:
- WO-A1-2012/084041
- WO-A1-2013/123991

## Description

### TECHNICAL FIELD

The present disclosure relates to a method and systems for facilitating navigation among operator workstation screens in a control and monitoring system.

### BACKGROUND

In a control room of a plant, a typical operator workstation can comprise many operator workstation screens of different sizes and purposes. For example, a workstation including the ABB® 800xA system may comprise nine operator workstation screens of different sizes. It may be difficult for an operator to effectively navigate in all the screens in an efficient manner.

There are several usability problems caused by having multiple operator workstation screens. For example, operators can often find it difficult to locate the mouse pointer on the screens. Another problem is that it is difficult to orient in process graphics that are shown on many screens. For instance, when an alarm appears, it may not be clear at which screen the operator should look to find information regarding the alarm and the alarm object.

Similarly, in education processes operators in training might experience difficulties while learning the operator workspace system. They need to train on simulators and require help from experienced operators staying by their side to help them familiarise with the system.

WO2013/123991 A1 discloses a method for providing a navigation tool of a user interface for an industrial control system. The control system is arranged with a plurality of process graphics comprising one or more software objects. The software objects are arranged in hierarchical groups each representing a process, part-process or an equipment, in which materials are moved and/or processed in a predetermined order. The navigation tool includes a graphic image or map showing the plurality of process graphics symbolically arranged as a plurality of nodes. Each node is spatially arranged at a given distance from the centre of the map according to a hierarchical relationship between the process graphics, and the map is displayed superimposed on top of the process graphic currently displayed on the workstation. A computer program and a workstation are also described. The node representing the currently open process graphic is shown by a visual indicator.

WO2012/084041 A1 discloses a method for notifying at least a first condition in an industrial system by means of a monitoring system in order to draw the attention of an operator monitoring the industrial system to the at least one condition. The method comprises displaying the first condition in a first portion of a display screen of the monitoring system, determining by means of eye tracking an area where a user focuses on the display screen, the area where the user focuses differing from the first portion, and alerting the user of the first condition in order to allow the user to be notified of the first condition in the industrial system.

### SUMMARY

In view of the above, an object of the present disclosure is to provide a method and systems for solving or at least mitigating the above-discussed problems.

There is hence according to a first aspect of the present disclosure provided a method of facilitating user navigation among a plurality of operator workstation screens of a control and monitoring system, wherein the method is performed by the control and monitoring system and comprises: determining a condition of interest, determining a workstation screen identifier identifying an operator workstation screen displaying the condition of interest as condition of interest graphics, and transmitting the workstation screen identifier to a first wearable augmented reality, AR, device to thereby initiate displaying an indication of a location of the operator workstation screen displaying the condition of interest graphics.

The workstation screen identifier is sent to the first wearable AR device. The first wearable AR device may thus by means of AR indicate to an operator wearing the first wearable AR device on which operator workstation screen the condition of interest graphics is located. The operator may thereby promptly become aware of a condition of interest and the operator workstation screen on which the condition of interest graphics is being displayed. This allows the operator to quickly navigate to the condition of interest graphics and handle the underlying condition of interest, if so required. Moreover, it facilitates for an operator in training to become acquainted with the layout of for example process graphics commonly displayed by the plurality operator workstation screens.

Moreover, since the first wearable AR device utilises AR to indicate the location of the condition of interest graphics to a user, the indication will remain personal. To this end, personnel in a control room other than the operator wearing the first wearable AR device will not be disturbed by the visual indication. In this manner, a plurality of operators could potentially share a large number of operator workstation screens, each operator wearing a respective wearable AR device and being presented with individual AR indications of importance only for the individual operator. Hence, tailor-made data presentation, which does not disturb other operators, can be provided. This may make monitoring and control of large industrial processes more efficient and any mitigating action may smoothly be provided.

One embodiment comprises determining a condition of interest graphics location on the operator workstation screen displaying the condition of interest graphics, wherein the transmitting in step c) further includes transmitting the condition of interest graphics location.

One embodiment comprises: receiving an object location request from the first wearable AR device concerning an object location among the operator workstation screens, wherein the determining of the condition of interest is based on the object location request and the condition of interest graphics marks the object location.

The condition of interest is in this case associated with the object location request, and arises as a result of the received objection location request.

One embodiment comprises determining the object location on the operator workstation screen, wherein the transmitting involves transmitting the object location.

According to one embodiment the object is a mouse pointer or an alarm object. Hereto, a user may wish to locate for example the mouse pointer among the plurality of operator workstation screens, and thus instructs the first wearable AR device to find. The first wearable AR device hence sends the objection location request to the control and monitoring system, which as a result determines that a condition of interest has occurred. The condition of interest is thus in this case created by the user and in particular the object location request received by the control and monitoring system.

According to one embodiment a first subset of the plurality of operator workstation screens form a first monitoring sector configured to display a first section of an industrial process, and a second subset of the plurality of operator workstation screens form a second monitoring sector configured to display a second section of the industrial process, wherein the condition of interest graphics is displayed on an operator workstation screen of the first monitoring sector and the first wearable AR device is associated with the first monitoring sector, wherein the transmitting further involves transmitting the workstation screen identifier to a second wearable AR device associated with the second monitoring sector.

In a control room, there may for example be several operator workstations or islands, each being populated by a plurality of operator workstation screens. Each operator workstation may for example be dedicated to a certain part or section of an industrial process. Each operator workstation or island may be under the responsibility of a respective operator. Each operator workstation is part of the same control and monitoring system. The operator workstation screens of all of the operator workstations hence receive their data from the same control and monitoring system. Since the operator workstations are for monitoring and controlling a common main industrial process, the first section and the second section may influence each other. For example, a fault/alarm or trend in the first section may propagate to the second section.

The first subset of operator workstation screens forming the first monitoring sector may be operator workstation screens of a first operator workstation or island. The second subset of operator workstation screens forming the second monitoring sector may be operator workstation screens of a second operator workstation or island.

Due to the cross-communication concerning a condition of interest graphic relating to the first section to the second wearable AR device, an operator responsible for the second operator workstation may become aware of an upcoming potential problem at an early stage. This may allow the operator of the second operator workstation to take preparatory actions before the problem potentially propagates to the second section of the industrial process.

According to one embodiment the determining of a condition of interest involves determining that a process variable value is above a predetermined threshold value, wherein the condition of interest is indicated on the operator workstation screen by displaying the condition of interest graphics.

The condition of interest, which is underlying the condition of interest graphics may thus for example be determined based on the comparison of process variable values with respective predetermined threshold values. A process variable value which exceeds the corresponding predetermined threshold may be an indication of a trend, an alarm situation or another abnormal event which should be brought to the awareness of the operator by displaying a condition of interest graphics.

One embodiment comprises determining based on the condition of interest a type of indication to be displayed by the first wearable AR device, wherein the transmitting involves transmitting the determined type of indication to be displayed to the first wearable AR device.

The control and monitoring system may thus, depending on the type of condition of interest determined, determine how an indication is to be displayed by the first wearable AR device. The control and monitoring system may for example comprise a database with a plurality of different condition of interests, each being associated with a certain type of indication. From this database, the control and monitoring system may be configured to select the appropriate type of indication and transmit this together with the workstation screen identifier to the first wearable AR device. The first wearable AR device will in this manner know what icon, object and/or text to display on the AR screen.

As an alternative to the above, the type of indication may be preselected by a user for example using the first wearable AR device or by means of the control and monitoring system. As yet another alternative, when an object location request is transmitted by the first wearable AR device, the type of indication may be determined by the first wearable AR device based on the type of object that user requests the location of.

In one variation, the control and monitoring system may also transmit the condition of interest if the condition of interest is obtained based on a process variable value exceeding a predetermined threshold. The first wearable AR device may in this variation be able to determine what type of indication to display on the AR screen.

There is according to a second aspect of the present disclosure provided a computer program comprising computer code which when executed by processing circuitry of a control and monitoring system causes the control and monitoring system to perform the steps of the method according to the first aspect.

There is according to a third aspect of the present disclosure provided a computer program product comprising a storage medium having computer program according to the second aspect stored thereon.

There is according to a fourth aspect of the present disclosure provided a control and monitoring system comprising: a plurality of operator workstation screens, a storage medium comprising computer code, and processing circuitry which when executing the computer code causes the control and monitoring system to perform the steps of the method according to the first aspect.

There is according to a fifth aspect of the present disclosure provided an augmented reality, AR, system comprising: the control and monitoring system according to the fourth aspect, and a first wearable AR device comprising an AR screen, the first wearable AR device being configured to wirelessly communicate with the control and monitoring system.

According to one embodiment the first wearable AR device is configured to transmit an object location request to the control and monitoring system.

According to one embodiment each operator workstation screen is provided with a screen identifying element identifying the operator workstation screen, wherein the first wearable AR device is configured to identify the operator workstation screen displaying the condition of interest graphics based on the workstation screen identifier received from the control and monitoring system and the corresponding screen identifying element, and wherein the first wearable AR device is configured to indicate on the AR screen the location of the operator workstation screen displaying the condition of interest graphics based on the screen identifying element to make the user aware of the condition of interest graphics.

The screen identifying element may for example be a visual marker. An example of a visual marker is a quick response (QR)-code. Each screen identifying element may be arranged on a corner of an operator workstation screen. For example, each corner of an operator workstation screen may be provided with a screen identifying element. The size of the operator workstation screen and its position in the coordinate system of the first wearable AR device may thus be determined by reading the QR-codes. Alternatively, a single screen identifying element may contain size information and its corner location among the four corners, in which case only one screen identifying element may be provided for each operator workstation screen.

The screen identifying element can instead of QR-codes for example be an infrared (IR) transmitter. The IR signal sent by the IR transmitter may in this case contain the corresponding information as a QR-code, such as screen identifying element location and/or size of the corresponding operator workstation screen. Other near-field communication technologies could alternatively be used, for example Bluetooth.

According to one embodiment the first wearable AR device comprises a gaze detector configured to determine a gaze direction of a user of the first wearable AR device, wherein the first wearable AR device is configured to indicate on the AR screen the location of the operator workstation screen displaying the condition of interest graphics further based on the gaze direction.

According to one embodiment the first wearable AR device is configured to display an indication of the operator workstation screen on the AR screen which corresponds to a mid or far peripheral field of the user. The indication will hence not be displayed in the central or near peripheral field, and will thus not obstruct any objects that the user may currently be focusing on.

The indication may for example blink or move, especially if displayed in a mid or far peripheral field. This may ensure that the user notices the indication.

The indication may for example include an arrow which points towards or onto the operator workstation screen of interest, i.e. the one displaying the condition of interest graphics and/or other object such as a mouse pointer.

According to one embodiment the first wearable AR device is configured to display an icon or text in addition to the indication about the location of the condition of interest graphics or other object. This icon or text may for example provide information about the condition of interest graphics. Hence, for example, the indication may be an arrow, and the icon or text may provide information concerning the condition of interest graphics towards which the arrow points. The user may thus be able to, based on priority, determine whether to continue with current work or shift focus towards the condition of interest graphics.

There is according to a sixth aspect provided a use of a first wearable augmented reality, AR, wearable in an AR system according to the fifth aspect.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise. Moreover, any step in a method need not necessarily have to be carried out in the presented order, unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a control and monitoring system including a perspective view of a operator workstation;
Fig. 2 schematically shows a wearable AR device;
Fig. 3 schematically shows an example of an AR system including the control and monitoring system in Fig. 1 and the wearable AR device in Fig. 2;
Figs 4a-c are flowcharts of methods of facilitating navigation among a plurality of operator workstation screens;
Figs 5a and 5b shows examples of views through an AR screen of the wearable AR device;
Figs 6a and 6b show examples of views through an AR screen of the wearable AR device;
Fig. 7 shows an example of an operator using a shift report button; and
Fig. 8 schematically depicts a control room provided with several operator workstations.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

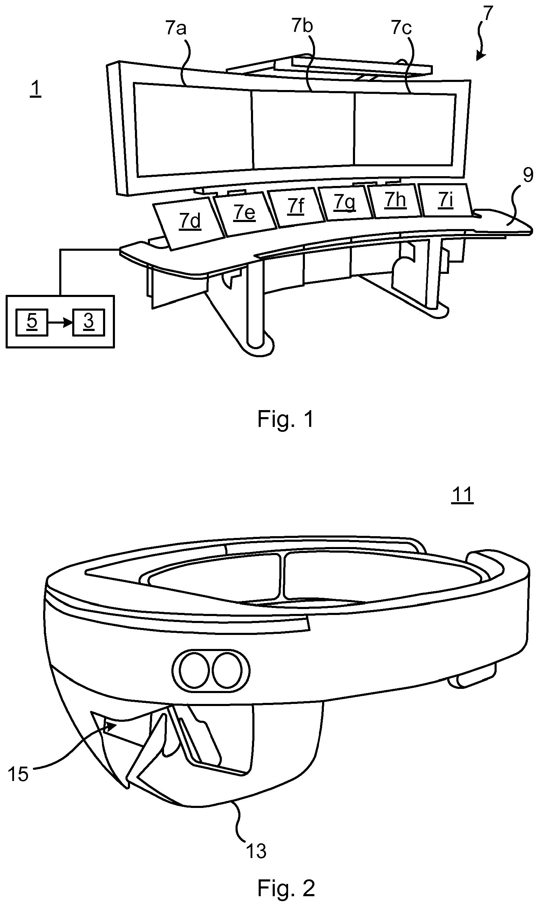

Fig. 1 depicts a control and monitoring system 1. The exemplified control and monitoring system 1 is a process control and monitoring control system configured to monitor and control an industrial process or a portion thereof.

The control and monitoring system 1 comprises processing circuitry 3 and a storage medium 5. The storage medium 5 comprises computer code which when executed by the processing circuitry 3 causes the control and monitoring system 1 to perform the methods disclosed herein.

The processing circuitry 3 uses any combination of one or more of a suitable central processing unit (CPU), multiprocessor, microcontroller, programmable logic controller (PLC), digital signal processor (DSP), application specific integrated circuit (ASIC), field programmable gate arrays (FPGA) etc., capable of executing any herein disclosed operations concerning navigation among a plurality of operator workstation screens.

The storage medium 5 may for example be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory.

The control and monitoring system 1 also comprises a plurality of operator workstation screens 7a-7i. The operator workstation screens 7a-7i are configured to communicate with the processing circuitry 3. The operator workstation screens 7a-7i are configured to display process graphics. Each operator workstation 7a-7i may be configured to display distinct process graphics with respect to the process graphics displayed on the other operator workstation screens 7a-7i. The process graphics are related to the underlying industrial process (not shown in Fig. 1) which the control and monitoring system 1 is configured to monitor and control.

The operator workstations screens 7a-7i form part of an operator workstation 7. The operator workstation 7 may for example include a desk 9 onto which the operator workstation screens 7a-7i are mounted. A single operator may have as working task to monitor all of the operator workstation screens 7a-7i of the operator workstation 7.

Fig. 2 shows an example of a wearable AR device 11 configured to wirelessly communicate with the control and monitoring system 1. The wearable AR device 11 is adapted to be worn by a user. The wearable AR device 11 comprises an AR screen 13. The AR screen 13 is transparent in the visible spectrum. A user is thus able to see through the AR screen 13. The wearable AR device 11 is configured to project AR onto the AR screen 13.

The wearable AR device 11 may also comprise a gaze detector 15. The gaze detector 15 is configured to determine the gaze direction of a user wearing the wearable AR device 11.

The wearable AR device 11 may according to one variation comprise a microphone configured to record user voice commands. According to one variation, the wearable AR device 11 may also comprise speakers to provide voice instructions or other types of sound to a user. These examples will be elaborated upon in the following.

The wearable AR device 11 may also comprise wearable device processing circuitry. The wearable device processing circuitry may be configured to determine object locations displayed on operator workstation screens 7a-7i in the coordinate system of the wearable AR device 11, to display AR in specific locations on the AR screen 13, to determine the gaze direction of a user, and to determine the spatial location of the wearable AR device 11 in the coordinate system of the wearable AR device 11. If audio is involved, e.g. voice commands and/or speakers, the wearable device processing circuitry may be configured to perform these instructions too.

The exemplified wearable AR device 11 comprises AR glasses and the AR screen 13 is a visor. One example of suitable AR glasses is the Microsoft® HoloLens. Other wearable devices which are able to provide AR on a screen before the eyes of a user are also envisaged. For instance, another example of a wearable AR device is an AR contact lens.

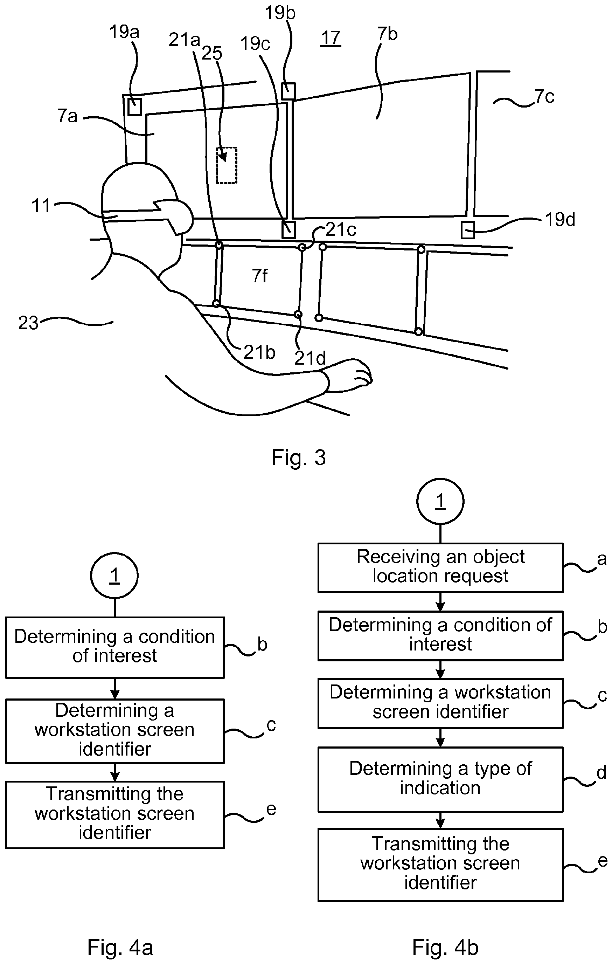

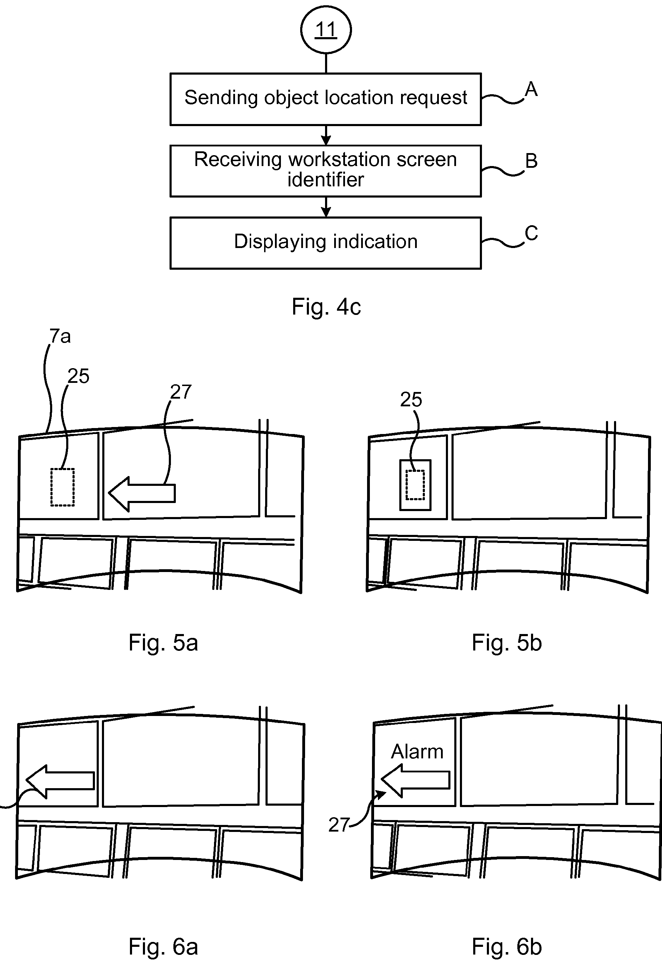

Turning now to Figs 3 and 4a-c an example of an AR system 17 and the operation thereof in two example situations will now be described. The AR system 17 comprises the control and monitoring system 1 and the wearable AR device 11. Each operator workstation screen 7a-7i is provided with a plurality of screen identifying elements. The screen identifying elements may be visible passive screen identifying elements or active screen identifying elements. In the present example, each operator workstation screen is provided with four screen identifying elements 19a-19d, 21a-21d. For example, a first operator workstation screen 7a has screen identifying elements 19a-19c provided on its corners. The fourth screen identifying element of the first operator workstation screen 7a is not shown. A second operator workstation screen 7f is provided with four screen identifying elements 21a-21d and so on.

The control and monitoring system 1 is configured to in a step b) determine when a condition of interest occurs. A condition of interest may for example be a condition in the underlying industrial process and may for example be a trend that may lead to an adverse condition or an alarm. In general, a condition of interest is a condition which should be brought to the attention of the operator or a condition caused by the user as a result of an object location request received by the control and monitoring system 1.

The control and monitoring system 1 is configured to receive measurements and/or estimations of process variables in the form of process variable values. The control and monitoring system 1 may be configured to determine whether a condition of interest has occurred based on the continuously received process variable values. For example, the control and monitoring system 1 may be configured to determine that a condition of interest has occurred if a process variable value is above a predetermined threshold value. The control and monitoring system 1 is configured to display a detected condition of interest, if a process variable value is above a predetermined threshold value, in the form of condition of interest graphics on an appropriate operator workstation screen 7a-7i of the plurality of operator workstation screens 7a-7i, e.g. an operator workstation screen 7a-7i which has process graphics associated with the condition of interest.

An operator 23 seated at the operator workstation and monitoring the operator screens 7a-7i wears the wearable AR device 11 and monitors the operator workstation screens 7a-7i through the wearable AR device 11.

In a first example situation, in the event that a condition of interest is detected by the control and monitoring system 1, due to a process variable value exceeding the corresponding predetermined threshold value, and displayed as condition of interest graphics on one of the operator workstation screens 7a-7i, the control and monitoring system 1 is configured to in a step c) determine a workstation screen identifier identifying the operator workstation screen 7a-7i on which the condition of interest graphics is being displayed. In the present example a condition of interest graphics 25 is displayed on the first operator workstation screen 7a. The control and monitoring system 1 is configured to in a step e) transmit the workstation screen identifier identifying the operator workstation screen which displays the condition of interest graphics 25. In this example, the control and monitoring system 1 hence transmits the workstation screen identifier of the first operator workstation screen 7a to the wearable AR device 11.

The wearable AR device 11 is configured to receive the workstation screen identifier in a step B) and uses the screen identifying elements 19a-19c to match with the workstation screen identifier to thereby identify the first operator workstation screen 7a. The screen identifying elements 19a-19c provide a measure of the size of the first operator workstation screen 7a, and of its distance from the wearable AR device 11. The wearable AR device 11 is configured to locate the first operator workstation screen 7a in the coordinate system of the wearable AR device 11.

When the above operations have been performed, the wearable AR device 11 is configured to display in a step C) an indication 27 on the AR screen 13 about the location of the condition of interest graphics 25, as shown in Fig. 5a. This indication 27 may for example include an arrow pointing in the direction of the first operator workstation screen 7a. The indication 27 could also or alternatively include a highlighting of the target operator workstation screen, in this example the first operator workstation screen 7a.

The control and monitoring system 1 may be configured to determine the condition of interest graphics location on the operator workstation screen 7a. The control and monitoring system 1 can in this case transmit the condition of interest graphics location to the wearable AR device 11 in step e). The condition of interest graphics location may for example be the coordinates of the condition of interest graphics 25 in the coordinate system of the control and monitoring system 1.

The wearable AR device 11 is configured to receive the condition of interest graphics location and to transform the coordinates to the coordinate system of the wearable AR device 11. This may be performed by first determining the coordinates of the target operator workstation screen, in this case the first operator workstation screen 7a. With knowledge of the coordinates of the target operator workstation screen, the condition of interest location can be determined in the coordinate system of the wearable AR device 11. In this case, the indication 27 could alternatively or additionally include a highlighting of an area identifying the location of the condition of interest graphics 25 on the target operator workstation screen 7a, as shown in Fig. 5b.

In one variation, the wearable AR device 11 is configured to provide vocal instructions of the location of the condition of interest graphics 25. For example, the wearable AR device 11 could instruct the user to "look to your left" or "look to your right" to notify the user of a condition of interest and the location of the condition of interest graphics 25.

In a second example situation, the user may instruct the wearable AR device 11 to show the location of a certain object displayed on an operator workstation screen 7a-7i. The user may for example provide the instructions by means of voice commands and/or by means of gestures. The wearable AR device 11 is configured to in a step A) send an object location request concerning the location of the object to the control and monitoring system 1. The control and monitoring system 1 is configured to receive the objection location request in a step a). The control and monitoring system 1 is again configured to in step b) determine a condition of interest. In this case the condition of interest is determined based on the object location request. In particular, it can be said that the condition of interest occurs as a result of the object location request. The condition of interest graphics is in this case a graphical display of the object that the user desires to obtain the location of. Contrary to the first example situation described above, where a process variable value exceeds a corresponding predetermined threshold value causing a condition of interest, the condition of interest graphics is in this example typically already displayed on one of the operator workstation screens 7a-7i when the object location request is received. This object may for example be the mouse pointer or an alarm object. The control and monitoring system 1 determines in step c) the workstation screen identifier of the operator workstation screen 7a-7i which currently displays the requested object. The control and monitoring system 1 is configured to transmit the workstation screen identifier displaying the object to the wearable AR device 11 in step e). In a similar manner as has been described above, the wearable AR device 11 will perform step B), locate the target operator workstation screen and in step C) display a visual indication on the AR screen 13 of the wearable AR device 11 concerning the location of the object among the plurality of operator workstation screens 7a-7i.

Additionally, the control and monitoring system 1 may be configured to determine and transmit the object location for example as coordinates in the coordinate system of the control and monitoring system 1 to the wearable AR device 11. The wearable AR device 11 is configured to determine the object location in the coordinate system of the wearable AR device 11.

The wearable AR device 11 may according to one variation be configured to monitor the gaze direction of the user and to provide an indication to the user concerning condition of interest graphics displayed on one of the operator workstation screens in case the gaze direction differs from that of the condition of interest graphics for longer than a predetermined amount of time. In this manner, the AR system may ensure that a user eventually will notice the condition of interest graphics being displayed.

Furthermore, according to one variation, the control and monitoring system 1 may in a step d) be configured to determine, based on the condition of interest determined in step b) a type of indication to be displayed by the wearable AR device 11. In this case, the transmitting in step e) involves transmitting the determined type of indication to be displayed to the wearable AR device 11. The type of indication may for instance be determined from e.g. a list in a database where each type of condition of interest may be associated with a type of indication. The wearable AR device 11 will thus display an indication 27 according to the type of indication received from the control and monitoring system 1.

Turning now to Fig. 6a an example of how the visual indication 27 can be displayed on the AR screen 13 is shown. The wearable AR device 11 may for example be configured to display the indication 27 in a mid or far peripheral field of the user instead of the near peripheral or central field of vision. This ensures that the user will not be disturbed if focusing on an important issue on one of the operator workstation screens when the indication 27 appears. The indication 27 may in this case be blinking and/or moving to ensure that the user notices the indication 27.

Fig. 6b shows another example of the indication 27. In this example, the indication 27 is supplemented with an icon or text which provides information about the condition of interest graphics. In the example in Fig. 5b, a text reading "Alarm" is displayed concurrently with the arrow. The operator is thus provided with information which allows the operator to prioritise whether to essentially instantly attend to matters relating to the condition of interest graphics.

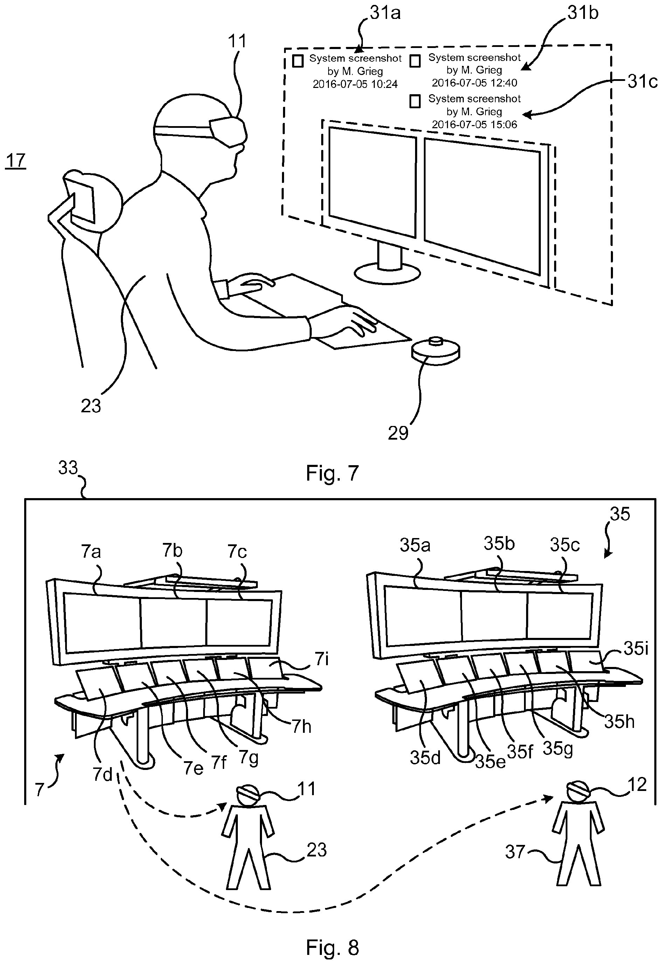

Fig. 7 shows the AR system 17 further including a shift report button 29. The shift report button 29 is integrated with the control and monitoring system 1 and the wearable AR device 11. The shift report button 29 is used for taking screen shots or videos of all the operator workstation screens 7a-7i when a condition of interest occurs during a shift. The screen shot(s) and video(s) are saved on the storage medium 5. When an operator shift takes place, the new operator will wear the wearable AR device 11. As an alternative to the shift report button 29 this functionality could be implemented in the wearable AR device 11 for example by performing a certain gesture and/or voice command to record screenshots or videos.

In the example shown in Fig. 7, the operator is presented with information on the AR screen 13 concerning events which occurred and where recorded during the previous shift. The events are presented as icons and/or text 31a-31c with information about when the screenshot or video was taken and by whom. The icons and/or text 31a-31c may additionally contain notes made by the operator of the previous shift. The note(s) may include text, a photo, a video or a voice message. The operator who is just commencing a shift will thus be able to view the screen shots and/or videos by selecting the icons and/or text 31a-31c. The selection may for example be provided by means of gestures by the operator. The icons and/or text 31a-31c may be displayed around the operator workstation screens so as not to obstruct them. This can be achieved because the wearable AR device 11 is configured to determine the location of all of the operator workstation screens 7a-7i using the screen identifying elements. The user may then, for example, drag an icon/text 31a-31c to one of the operator workstation displays and drop it to display the associated screenshots or video on all of the operator workstation screens 7a-7i, as initially seen by the operator who captured the condition of interest in a previous shift.

There may also be displayed generic information about previous shifts such as statistics from previous shift over previous operator activities, performance, level of alarms, amount of acknowledged alarms, etc.

Fig. 8 shows an example of a control room 33 containing a plurality of operator workstations. Control room 33 contains a first operator workstation 7 and a second operator workstation 35. Both operator workstations 7 and 35 form part of the common control and monitoring system 1. The first operator workstation 7 comprises a first subset of operator workstation screens 7a-7i forming a first monitoring sector configured to display a first section of an industrial process. The second operator workstation 35 comprises a second subset of operator workstation screens 35a-35i configured to display a second section of an industrial process. The first subset of operator workstation screens 7a-7i and the second subset of operator workstation screens 35a-35i hence typically display completely different process graphics, related to the respective section of the industrial process.

The first operator workstation 7 may be under the responsibility of a first operator 23 wearing a first wearable AR device 11 and the second operator workstation 35 may be under the responsibility of a second operator 37 wearing a second wearable AR device 12 identical in operation to the first wearable AR device 11. The first wearable AR device 11 is configured to be used with the first control section 7 and the second wearable AR device 12 is configured to be used with the second control section 35. Hereto, the first wearable AR device 11 typically only communicates with the control and monitoring system 1 concerning objects in the process graphics shown on the first subset of operator workstation screens 7a-7i. The second wearable AR device 12 typically only communicates with the control and monitoring system 1 concerning objects in the process graphics shown on the second subset of operator workstation screens 35a-35i. However, a condition of interest and the displayed condition of interest graphics may occur on one of the operator workstation screens of one of the two operator workstations 7 and 35 which can become relevant for the operator of the other operator workstation 7 and 35. Thus, for example, if a condition of interest graphic is displayed on an operator workstation display 7a-7i, this condition of interest graphics may be of relevance for the second operator 37 too. The control and monitoring system 1 may thus be configured to transmit the workstation screen identifier of an operator workstation screen 7a-7i displaying the condition of interest graphics to the second wearable AR device 12 too, as shown by the dashed arrow. This may ensure that the second operator 37 becomes aware of a condition of interest before a condition of interest resulting from the condition of interest in the first section has also become a condition of interest in the second section and thus being displayed as condition of interest graphics on one of the operator workstation displays 35a-35i of the second operator workstation 35.

The control and monitoring system 1 may be configured to select when a condition of interest is to be reported to the second wearable device 12 and vice versa. The control and monitoring system 1 may for example contain a database with information about conditions of interests and how they affect different sections of the industrial process.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A method of facilitating user navigation among a plurality of operator workstation screens (7a-7i, 9a-9i) of a control and monitoring system (1), wherein the method is performed by the control and monitoring system (1) and is being **characterised by** comprising:
determining (b) a condition of interest,
determining (c) a workstation screen identifier identifying an operator workstation screen (7a-7i, 9a-9i) displaying the condition of interest as condition of interest graphics (25), and
transmitting (e) the workstation screen identifier to a first wearable augmented reality, AR, device (11) to thereby initiate displaying an indication (27) of a location of the operator workstation screen (7a-7i, 9a-9i) displaying the condition of interest graphics (25).

2. The method as claimed in claim 1, comprising determining a condition of interest graphics location on the operator workstation screen (7a-7i, 9a-9i) displaying the condition of interest graphics (25), wherein the transmitting (c) further includes transmitting the condition of interest graphics location.

3. The method as claimed in claim 1 or 2, comprising:
receiving (a) an object location request from the first wearable AR device (11) concerning an object location among the operator workstation screens (7a-7i), wherein the determining (b) of the condition of interest is based on the object location request and the condition of interest graphics marks the object location.

4. The method as claimed in claim 3, comprising determining the object location on the operator workstation screen (7a-7i, 9a-9i), wherein the transmitting in step f) involves transmitting the object location.

5. The method as claimed in claim 3 or 4, wherein the object is a mouse pointer or an alarm object.

6. The method as claimed any of the preceding claims, wherein a first subset (7a-7i) of the plurality of operator workstation screens (7a-7i, 9a-9i) form a first monitoring sector configured to display a first section of an industrial process, and a second subset (9a-9i) of the plurality of operator workstation screens (7a-7i, 9a-9i) form a second monitoring sector configured to display a second section of the industrial process, wherein the condition of interest graphics (25) is displayed on an operator workstation screen of the first monitoring sector and the first wearable AR device (11) is associated with the first monitoring sector, wherein the transmitting further involves transmitting the workstation screen identifier to a second wearable AR device (12) associated with the second monitoring sector.

7. The method as claimed in any of the preceding claims, wherein the determining (a) of a condition of interest involves determining that a process variable value is above a predetermined threshold value, wherein the condition of interest is indicated on the operator workstation screen (7a-7i, 9a-9i) by displaying the condition of interest graphics (25).

8. The method as claimed in any of the preceding claims, comprising determining (d) based on the condition of interest a type of indication to be displayed by the first wearable AR device (11), wherein the transmitting (e) involves transmitting the determined type of indication to be displayed to the first wearable AR device (11).

9. A computer program comprising computer code which when executed by processing circuitry (3) of a control and monitoring system (1) causes the control and monitoring system (1) to perform the steps of the method as claimed in any of claims 1-8.

10. A control and monitoring system (1) comprising:
a plurality of operator workstation screens (7a-7i, 9a-9i),
a storage medium (5) comprising computer code, and
processing circuitry (3) which when executing the computer code causes the control and monitoring system (1) to perform the steps of the method as claimed in any of claims 1-7.

11. An augmented reality, AR, system (17) comprising:
the control and monitoring system (1) as claimed in claim 10, and
a first wearable AR device (11) comprising an AR screen (13), the first wearable AR device (11) being configured to wirelessly communicate with the control and monitoring system (1).

12. The AR system (17) as claimed in claim 11, wherein the first wearable AR device (11) is configured to transmit an object location request to the control and monitoring system (1).

13. The AR system (17) as claimed in claim 11 or 12, wherein each operator workstation screen (7a-7i, 9a-9i) is provided with a screen identifying element (19a-21c, 21a-21d) identifying the operator workstation screen (7a-7i, 9a-9i), wherein the first wearable AR device (11) is configured to identify the operator workstation screen (7a-7i, 9a-9i) displaying the condition of interest graphics (25) based on the workstation screen identifier received from the control and monitoring system (1) and the corresponding screen identifying element (19a-19c, 21a-21d), and wherein the first wearable AR device (11) is configured to indicate on the AR screen (13) the location of the operator workstation screen (7a-7i, 9a-9i) displaying the condition of interest graphics (25) based on the screen identifying element to make the user aware of the condition of interest graphics.

14. The AR system (17) as claimed in claim 13, wherein the first wearable AR device (11) comprises a gaze detector (15) configured to determine a gaze direction of a user of the first wearable AR device (11), wherein the first wearable AR device (11) is configured to indicate on the AR screen (13) the location of the operator workstation screen (7a-7i, 9a-9i) displaying the condition of interest graphics (25) further based on the gaze direction.

15. Use of a first wearable augmented reality, AR, device (11) in an AR system (17) as claimed in any of claims 11-14.

## Patentansprüche

1. Verfahren zum Ermöglichen einer Anwendernavigation zwischen mehreren Bedienerarbeitsplatzbildschirmen (7a-7i, 9a-9i) eines Steuer- und Überwachungssystems (1), wobei das Verfahren durch das Steuer- und Überwachungssystem (1) durchgeführt wird und **gekennzeichnet ist durch**:
Bestimmen (b) einer Bedingung von Interesse,
Bestimmen (c) einer Arbeitsplatzbildschirmkennung, die einen Bedienerarbeitsplatzbildschirm (7a-7i, 9a-9i), der die Bedingung von Interesse als Graphik (25) einer Bedingung von Interesse anzeigt, identifiziert, und
Senden (e) der Arbeitsplatzbildschirmkennung zu einer ersten tragbaren Vorrichtung (11) für erweiterte Realität, AR-Vorrichtung, um dadurch ein Anzeigen einer Angabe (27) eines Orts des Bedienerarbeitsplatzbildschirms (7a-7i, 9a-9i), der die Graphik (25) einer Bedingung von Interesse anzeigt, zu initiieren.

2. Verfahren nach Anspruch 1, das das Bestimmen eines Orts einer Graphik einer Bedingung von Interesse auf dem Bedienerarbeitsplatzbildschirm (7a-7i, 9a-9i), der die Graphik (25) einer Bedingung von Interesse anzeigt, umfasst, wobei das Senden (c) ferner ein Senden des Orts einer Graphik einer Bedingung von Interesse enthält.

3. Verfahren nach Anspruch 1 oder 2, das Folgendes umfasst:
Empfangen (a) einer Objektortanforderung von der ersten tragbaren AR-Vorrichtung (11) bezüglich eines Objektorts zwischen den Bedienerarbeitsplatzbildschirmen (7a-7i), wobei das Bestimmen (b) der Bedingung von Interesse auf der Grundlage der Objektortanforderung erfolgt und die Graphik einer Bedingung von Interesse den Objektort markiert.

4. Verfahren nach Anspruch 3, das ein Bestimmen des Objektorts auf dem Bedienerarbeitsplatzbildschirm (7a-7i, 9a-9i) umfasst, wobei das Senden in Schritt f) ein Senden des Objektorts einbezieht.

5. Verfahren nach Anspruch 3 oder 4, wobei das Objekt ein Mauszeiger oder ein Alarmobjekt ist.

6. Verfahren nach einem der vorhergehenden Ansprüche, wobei eine erste Untermenge (7a-7i) der mehreren Bedienerarbeitsplatzbildschirme (7a-7i, 9a-9i) einen ersten Überwachungssektor, der konfiguriert ist, einen ersten Abschnitt eines industriellen Prozesses anzuzeigen, bildet und eine zweite Untermenge (9a-9i) der mehreren Bedienerarbeitsplatzbildschirme (7a-7i, 9a-9i) einen zweiten Überwachungssektor, der konfiguriert ist, einen zweiten Abschnitt des industriellen Prozesses anzuzeigen, bildet, wobei die Graphik (25) einer Bedingung von Interesse auf einem Bedienerarbeitsplatzbildschirm des ersten Überwachungssektors angezeigt wird und die erste tragbare AR-Vorrichtung (11) dem ersten Überwachungssektor zugeordnet ist und wobei das Senden ferner ein Senden der Arbeitsplatzbildschirmkennung zu einer zweiten tragbaren AR-Vorrichtung (12), die dem zweiten Überwachungssektor zugeordnet ist, umfasst.

7. Verfahren nach einem der vorhergehenden Ansprüche, wobei das Bestimmen (a) einer Bedingung von Interesse ein Bestimmen umfasst, dass ein Prozessvariablenwert über einem vorgegebenen Schwellenwert liegt, wobei die Bedingung von Interesse auf dem Bedienerarbeitsplatzbildschirm (7a-7i, 9a-9i) durch ein Anzeigen der Graphik (25) einer Bedingung von Interesse angegeben wird.

8. Verfahren nach einem der vorhergehenden Ansprüche, das ein Bestimmen (d) eines Typs einer Angabe, die durch die erste tragbare AR-Vorrichtung (11) angezeigt werden soll, auf der Grundlage der Bedingung von Interesse umfasst, wobei das Senden (e) ein Senden des bestimmten Typs einer Angabe, die angezeigt werden soll, zur ersten tragbaren AR-Vorrichtung (11) umfasst.

9. Computerprogramm, das Computercode umfasst, der, wenn er durch eine Verarbeitungsschaltungsanordnung (3) eines Steuer- und Überwachungssystems (1) ausgeführt wird, verursacht, dass das Steuer- und Überwachungssystem (1) die Schritte des Verfahrens nach einem der Ansprüche 1-8 durchführt.

10. Steuer- und Überwachungssystem (1), das Folgendes umfasst:
mehrere Bedienerarbeitsplatzbildschirme (7a-7i, 9a-9i),
ein Speichermedium (5), das Computercode enthält, und
eine Verarbeitungsschaltungsanordnung (3), die, wenn sie den Computercode ausführt, verursacht, dass das Steuer- und Überwachungssystem (1) die Schritte des Verfahrens nach einem der Ansprüche 1-7 durchführt.

11. System für erweiterte Realität, AR-System, (17), das Folgendes umfasst:
das Steuer- und Überwachungssystem (1) nach Anspruch 10 und
eine erste tragbare AR-Vorrichtung (11), die einen AR-Bildschirm (13) umfasst, wobei die erste tragbare AR-Vorrichtung (11) konfiguriert ist, mit dem Steuer- und Überwachungssystem (1) drahtlos zu kommunizieren.

12. AR-System (17) nach Anspruch 11, wobei die erste tragbare AR-Vorrichtung (11) konfiguriert ist, eine Objektortanforderung zum Steuer- und Überwachungssystem (1) zu senden.

13. AR-System (17) nach Anspruch 11 oder 12, wobei jeder Bedienerarbeitsplatzbildschirm (7a-7i, 9a-9i) mit einem bildschirmidentifizierenden Element (19a-21c, 21a-21d), das den Bedienerarbeitsplatzbildschirm (7a-7i, 9a-9i) identifiziert, versehen ist, wobei die erste tragbare AR-Vorrichtung (11) konfiguriert ist, den Bedienerarbeitsplatzbildschirm (7a-7i, 9a-9i), der die Graphik (25) einer Bedingung von Interesse anzeigt, auf der Grundlage der Arbeitsplatzbildschirmkennung, die vom Steuer- und Überwachungssystem (1) empfangen wird, und des entsprechenden bildschirmidentifizierenden Elements (19a-21c, 21a-21d) zu identifizieren, und die erste tragbare AR-Vorrichtung (11) konfiguriert ist, auf dem AR-Bildschirm (13) den Ort des Bedienerarbeitsplatzbildschirms (7a-7i, 9a-9i), der die Graphik (25) einer Bedingung von Interesse anzeigt, auf der Grundlage des bildschirmidentifizierenden Elements anzugeben, um den Anwender auf die Graphik einer Bedingung von Interesse aufmerksam zu machen.

14. AR-System (17) nach Anspruch 13, wobei die erste tragbare AR-Vorrichtung (11) eine Blickrichtungserfassungseinrichtung (15) umfasst, die konfiguriert ist, eine Blickrichtung eines Anwenders der ersten tragbaren AR-Vorrichtung (11) zu bestimmen, wobei die erste tragbare AR-Vorrichtung (11) konfiguriert ist, auf dem AR-Bildschirm (13) den Ort des Bedienerarbeitsplatzbildschirms (7a-7i, 9a-9i), der die Graphik (25) einer Bedingung von Interesse anzeigt, ferner auf der Grundlage der Blickrichtung anzugeben.

15. Verwendung einer ersten tragbaren Vorrichtung (11) für erweiterte Realität, AR-Vorrichtung, in einem AR-System (17) nach einem der Ansprüche 11-14.

## Revendications

1. Procédé pour faciliter la navigation de l'utilisateur parmi une pluralité d'écrans de poste de travail d'opérateurs (7a-7i, 9a-9i) d'un système de commande et de surveillance (1), où le procédé est exécuté par le système de commande et de surveillance (1) et est **caractérisé en ce qu'**il comprend les étapes suivantes :
déterminer (b) une condition d'intérêt,
déterminer (c) un identificateur d'écran de poste de travail identifiant un écran de poste de travail d'opérateur (7a-7i, 9a-9i) affichant la condition d'intérêt en tant que graphiques de condition d'intérêt (25), et
transmettre (e) l'identifiant d'écran de poste de travail à un premier dispositif de réalité augmentée, AR, portable (11) pour ainsi initier l'affichage d'une indication (27) d'un emplacement de l'écran de poste de travail d'opérateur (7a-7i, 9a-9i) affichant les graphiques de condition d'intérêt (25).

2. Procédé tel que revendiqué dans la revendication 1, comprenant de déterminer un emplacement de graphique de condition d'intérêt sur l'écran de poste de travail d'opérateur (7a-7i, 9a-9i) affichant les graphiques de condition d'intérêt (25), où la transmission (c) comprend en outre de transmettre l'emplacement des graphiques de condition d'intérêt.

3. Procédé tel que revendiqué dans la revendication 1 ou la revendication 2, comprenant les étapes suivantes :
recevoir (a) une demande d'emplacement d'objet depuis le premier dispositif AR portable (11) concernant un emplacement d'objet parmi les écrans de poste de travail d'opérateur (7a-7i), où la détermination (b) de la condition d'intérêt est basée sur la demande d'emplacement d'objet et les graphiques de condition d'intérêt marquent l'emplacement d'objet.

4. Procédé tel que revendiqué dans la revendication 3, comprenant de déterminer l'emplacement d'objet sur l'écran de poste de travail d'opérateur (7a-7i, 9a-9i), où la transmission à l'étape f) implique la transmission de l'emplacement d'objet.

5. Procédé tel que revendiqué dans la revendication 3 ou la revendication 4, dans lequel l'objet est un pointeur de souris ou un objet d'alarme.

6. Procédé tel que revendiqué dans l'une quelconque des revendications précédentes, dans lequel un premier sous-ensemble (7a-7i) de la pluralité d'écrans de poste de travail d'opérateur (7a-7i, 9a-9i) forme un premier secteur de surveillance configuré pour afficher une première section d'un processus industriel, et un second sous-ensemble (9a-9i) de la pluralité d'écrans de poste de travail d'opérateur (7a-7i, 9a-9i) forme un second secteur de surveillance configuré pour afficher une seconde section du processus industriel, où les graphiques de condition d'intérêt (25) sont affichés sur un écran de poste de travail d'opérateur du premier secteur de surveillance et le premier dispositif AR portable (11) est associé au premier secteur de surveillance, où la transmission implique en outre de transmettre l'identifiant d'écran de poste de travail à un second dispositif AR portable (12) associé au second secteur de surveillance.

7. Procédé tel que revendiqué dans l'une quelconque des revendications précédentes, dans lequel la détermination (a) d'une condition d'intérêt implique de déterminer qu'une valeur de variable de processus est supérieure à une valeur seuil prédéterminée, où la condition d'intérêt est indiquée sur l'écran de poste de travail d'opérateur (7a-7i, 9a-9i) en affichant les graphiques de condition d'intérêt (25).

8. Procédé tel que revendiqué dans l'une quelconque des revendications précédentes, comprenant de déterminer (d), sur la base de la condition d'intérêt, un type d'indication à afficher par le premier dispositif AR portable (11), où la transmission (e) implique la transmission du type déterminé d'indication à afficher au premier dispositif AR portable (11).

9. Programme informatique comprenant un code informatique qui, lorsqu'il est exécuté par des circuits de traitement (3) d'un système de commande et de surveillance (1), amène le système de commande et de surveillance (1) à exécuter les étapes du procédé tel que revendiqué dans l'une quelconque des revendications 1 à 8.

10. Système de commande et de surveillance (1) comprenant :
une pluralité d'écrans de poste de travail d'opérateur (7a-7i, 9a-9i),
un support de stockage (5) comprenant un code informatique, et
des circuits de traitement (3) qui, lorsqu'ils exécutent le code informatique, amènent le système de commande et de surveillance (1) à exécuter les étapes du procédé tel que revendiqué dans l'une quelconque des revendications 1 à 7.

11. Système de réalité augmentée, AR, (17) comprenant :
le système de commande et de surveillance (1) tel que revendiqué dans la revendication 10, et
un premier dispositif AR portable (11) comprenant un écran AR (13), le premier dispositif AR portable (11) étant configuré pour communiquer sans fil avec le système de commande et de surveillance (1).

12. Système d'AR (17) tel que revendiqué dans la revendication 11, dans lequel le premier dispositif d'AR portable (11) est configuré pour transmettre une demande d'emplacement d'objet au système de commande et de surveillance (1).

13. Système d'AR (17) tel que revendiqué dans la revendication 11 ou la revendication 12, dans lequel chaque écran de poste de travail d'opérateur (7a-7i, 9a-9i) est muni d'un élément d'identification d'écran (19a-21c, 21a-21d) identifiant l'écran de poste de travail d'opérateur (7a-7i, 9a-9i), où le premier dispositif d'AR portable (11) est configuré pour identifier l'écran de poste de travail d'opérateur (7a-7i, 9a-9i) affichant les graphiques de condition d'intérêt (25) sur la base de l'identifiant d'écran de poste de travail reçu du système de commande et de surveillance (1) et de l'élément d'identification d'écran correspondant (19a-19c, 21a-21d), et où le premier dispositif d'AR portable (11) est configuré pour indiquer sur l'écran d'AR (13) l'emplacement de l'écran de poste de travail d'opérateur (7a-7i, 9a-9i) affichant les graphiques de condition d'intérêt (25) sur la base de l'élément d'identification d'écran pour faire connaître à l'utilisateur les graphiques de condition d'intérêt.

14. Système d'AR (17) tel que revendiqué dans la revendication 13, dans lequel le premier dispositif d'AR portable (11) comprend un détecteur de regard (15) configuré pour déterminer une direction de regard d'un utilisateur du premier dispositif d'AR portable (11), où le premier dispositif d'AR portable (11) est configuré pour indiquer sur l'écran d'AR (13) l'emplacement de l'écran de poste de travail d'opérateur (7a-7i, 9a-9i) affichant les graphiques de condition d'intérêt (25) en se basant en outre sur la direction du regard.

15. Utilisation d'un premier dispositif de réalité augmentée, AR, portable (11) dans un système d'AR (17) tel que revendiqué dans l'une quelconque des revendications 11 à 14.
